# EUROPÄISCHE PATENTANMELDUNG

(11) **EP 0 665 703 A2**
(43) Veröffentlichungstag der Anmeldung: **02.08.1995**
(21) Anmeldenummer: 95100405.0
(22) Anmeldetag: 13.01.1995
(51) Int. Cl.: H04Q 11/04, H04Q 3/62

(54) **Zeitmultiplex Nebenstellenanlage**

(30) Priorität: 26.01.1994 DE 4402138
(71) Anmelder: ROBERT BOSCH GMBH, 70442 Stuttgart (DE)
(72) Erfinder: Krueger, Frank, D-10553 Berlin (DE); Knobloch, Siegfried, D-13353 Berlin (DE)

(57) **Zusammenfassung**

Bei einer Einrichtung zur wahlweisen Verbindung einer Vielzahl von Teilnehmern über mindestens einen PCM-Signale führenden PCM-Bus, wobei den einzelnen Teilnehmern Zeitschlitze zugeordnet sind und wobei Zwischenspeicher vorgesehen sind, die entsprechend zugeführter Vermittlungsinformation mindestens einem PCM-Bus jeweils für einen Teilnehmer bestimmte PCM-Signale entnehmen und in den dem Teilnehmer zugeordneten Zeitschlitz einfügen (PCM-Koppelfeld), sind mehrere PCM-Koppelfelder vorgesehen, die mindestens teilweise gleiche Verbindungen herstellen können, die PCM-Signale mindestens einem gemeinsamen PCM-Bus entnehmen und in mindestens einen gemeinsamen PCM-Bus einfügen.

## Beschreibung

Die Erfindung geht aus von einer Einrichtung nach der Gattung des Hauptanspruchs.

Einrichtungen zur wahlweisen Verbindung einer Vielzahl von Teilnehmern über mindestens einen PCM-Signale führenden PCM-Bus, wobei den einzelnen Teilnehmern Zeitschlitze zugeordnet sind und wobei Zwischenspeicher vorgesehen sind, die entsprechend zugeführter Vermittlungsinformation mindestens einem PCM-Bus jeweils für einen Teilnehmer bestimmte PCM-Signale entnehmen und in den dem Teilnehmer zugeordneten Zeitschlitz einfügen (PCM-Koppelfeld), haben sich insbesondere zur Vermittlung von Telefon- und Funkgesprächen bei Behörden und Organisationen mit Sicherheitsaufgaben bewährt. Dabei werden an die Systemverfügbarkeit derartiger Vermittlungssysteme hohe Anforderungen gestellt, denn Einsatzleitstellen, Wachen und andere Sicherheitsbereiche dürfen von keinem Ausfall des Vermittlungssystems betroffen sein. Bei einem bekannten Vermittlungssystem dieser Art (Bosch Technische Information Vermittlungssystem VMS 256) ist für den Fall eines Defekts des PCM-Koppelfeldes ein analoges Koppelfeld vorgesehen. Dieses ist jedoch mit erheblichem Aufwand verbunden.

Aufgabe der vorliegenden Erfindung ist es, die Sicherheit einer Vermittlungseinrichtung mit einem PCM-Koppelfeld zu erhöhen.

Diese Aufgabe wird mit den kennzeichnenden Merkmalen des Patentanspruchs 1 gelöst. Ein Vorteil der erfindungsgemäßen Einrichtung besteht darin, daß selbst bei Ausfall mehrerer zentraler Einrichtungen ein Betrieb des Vermittlungssystems möglich ist.

Gemaß einer Weiterbildung ist vorgesehen, daß die PCM-Koppelfelder über eigene Taktgeneratoren verfügen, wobei durch eine gemeinsame Steuerung jeweils nur einer der Taktgeneratoren aktivierbar ist, während die anderen PCM-Koppelfelder mit dem Takt des einen Taktgenerators synchronisiert werden. Diese Weiterbildung sichert einen zuverlässigen Betrieb des gemeinsamen PCM-Busses. Bei Vermittlungssystemen mit mehreren Bedienplätzen ist es vorteilhaft, wenn jeweils einem Bedienplatz ein PCM-Koppelfeld zugeordnet ist.

Eine vorteilhafte Auslegung der erfindungsgemäßen Einrichtung besteht darin, daß jedes PCM-Koppelfeld derart ausgelegt ist, daß es Verbindungen zu jedem Teilnehmer herstellen, jedoch bezüglich der Anzahl nicht alle Teilnehmer gleichzeitig verbinden kann. Hierbei ist eine Vermittlung von und zu allen Teilnehmern selbst dann noch möglich, wenn nur ein PCM-Koppelfeld arbeitet. Im Sinne einer Begrenzung des Aufwandes an redundanten Baugruppen wird jedoch eine Verringerung der Verkehrsgüte in Kauf genommen.

Um ein geordnetes Zusammenarbeiten mehrerer PCM-Koppelfelder auch bei Ausfall einer zentralen Steuerung zu ermöglichen, umfaßt eine andere Weiterbildung eine Steuerung, die festlegt, welches PCM-Koppelfeld welche Verbindung bewirkt, wobei bei Ausfall der Steuerung die PCM-Koppelfelder jeweils für vorgegebene Verbindungen vorgesehen sind.

Zu einer Erhöhung der Anpassungsfähigkeit an verschiedene Umstände des Betriebes kann gemäß einer anderen Weiterbildung die Steuerung derart ausgelegt sein, daß eine Verbindung auch während des Normalbetriebes von einem PCM-Koppelfeld an ein anderes übergeben werden kann.

Ein Ausführungsbeispiel der Erfindung ist in der Zeichnung anhand mehrerer Figuren dargestellt und in der nachfolgenden Beschreibung näher erläutert. Es zeigt:
- Fig. 1: ein Blockschaltbild eines Ausführungsbeispiels,
- Fig. 2: ein Blockschaltbild einer bekannten Einrichtung und
- Fig. 3: eine detailliertere Darstellung von Teilen des Ausführungsbeispiels nach Fig. 1.

Gleiche Teile sind in den Figuren mit gleichen Bezugszeichen versehen.

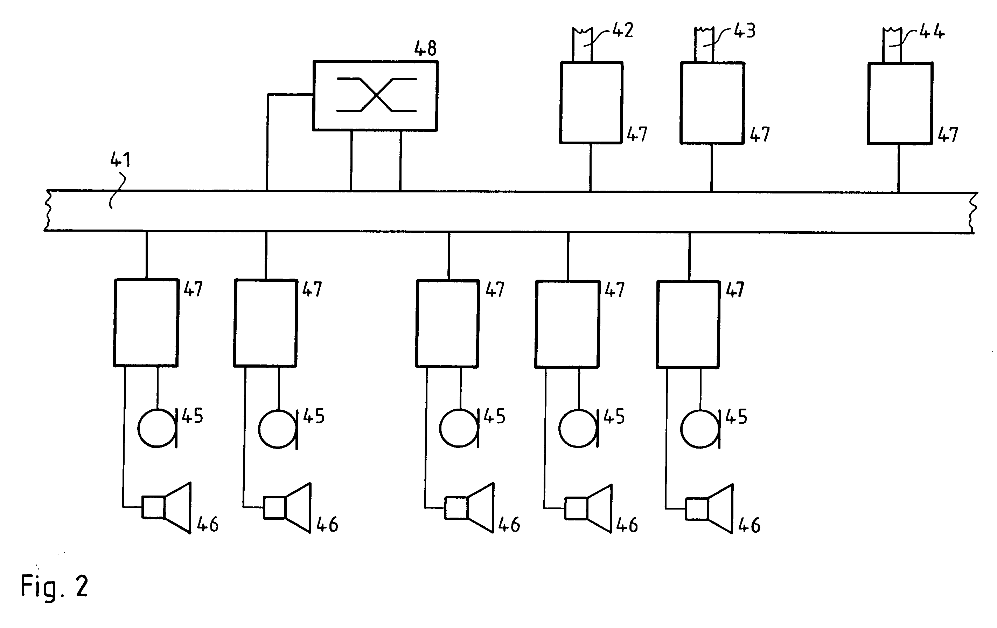

Bei dem in Fig. 2 dargestellten bekannten Vermittlungssystem dient ein PCM-Bus 41 - auch PCM-Highway genannt - zur Übertragung der NF-Signale zwischen verschiedenen Teilnehmern. Bei dem in obengenannter Durckschrift beschriebenen Vermittlungssystem sind mehrere PCM-Highways mit jeweils 32 Zeitschlitzen parallel geschaltet. Als Teilnehmer kommen beispielsweise Telefonapparate oder Übertragungsstellen zu Funkgeräten in Frage, die schematisch in Fig. 2 mit dem Bezugszeichen 42 bis 44 versehen sind und über Anpaßkarten 47 an den PCM-Bus 41 angeschlossen sind. Außerdem sind an das Vermittlungssystem mehrere Bedienplätze angeschlossen, von denen lediglich jeweils ein Mikrofon 45, ein Lautsprecher 46 und eine Anpaßkarte 47 dargestellt sind. Eine Anpaßkarte 47 enthält im wesentlichen einen Digital/Analog-Wandler und einen Analog/Digital-Wandler sowie Torschaltungen, welche die PCM-Signale während der jeweils dem Teilnehmer bzw. dem Bedienplatz zugeordneten Zeitschlitze dem PCM-Bus entnimmt oder in den PCM-Bus einfügt.

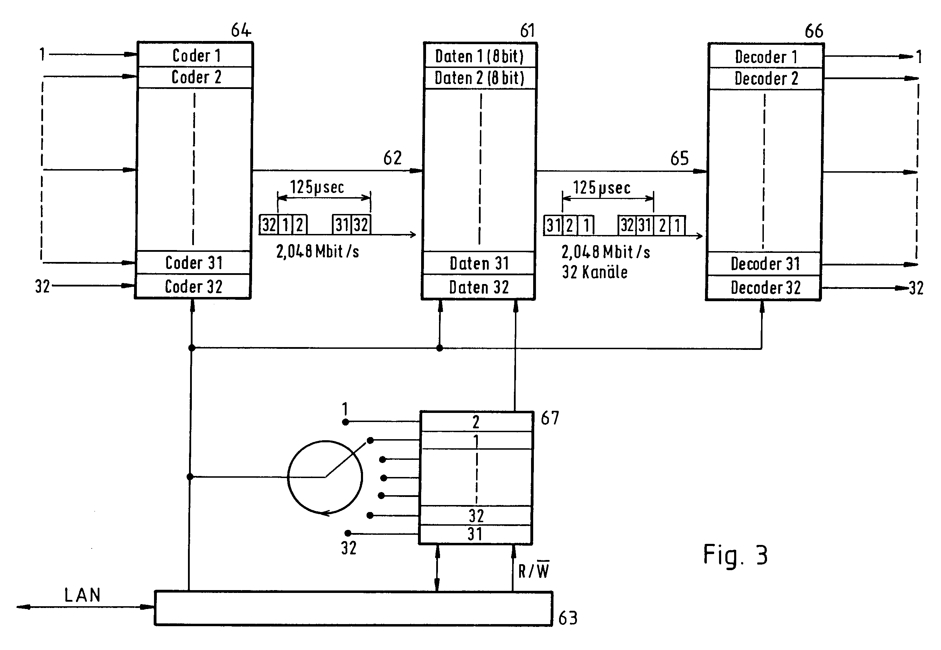

An den PCM-Bus 41 ist ferner ein PCM-Koppelfeld 48 angeschlossen, welches die von den Teilnehmern und Bedienplätzen in jweils einem Zeitschlitz ausgesandten PCM-Signale zwischenspeichert und derart verzögert ausgibt, daß die verzögerten PCM-Signale in einen für den Empfang vorgesehenen Zeitschlitz desjenigen Teilnehmers passen, der diese PCM-Signale erhalten soll. Einzelheiten des PCM-Koppelfeldes werden später im Zusammenhang mit Fig. 3 erläutert. In Fig. 2 ist lediglich dargestellt, daß das PCM-Koppelfeld 48 ein Taktsignal erhält.

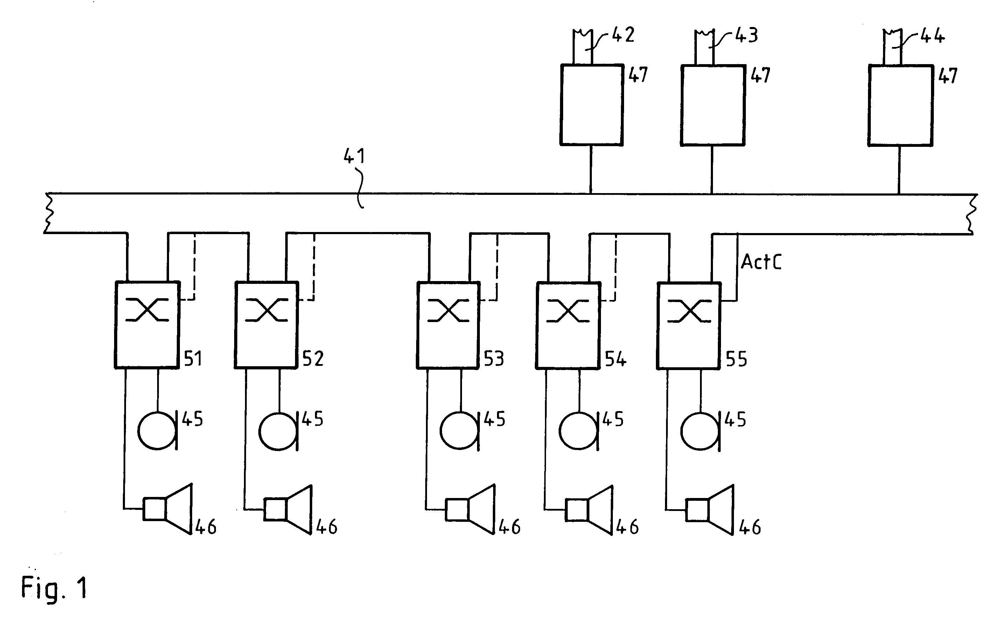

Durch einen Ausfall oder eine Fehlfunktion des PCM-Koppelfeldes 48 kann jegliche Verbindung zwischen den Teilnehmern verhindert werden. Bei der erfindungsgemäßen Einrichtung gemäß Fig. 1 sind an den PCM-Bus 41 mehrere PCM-Koppelfelder 51 bis 55 angeschlossen, die bei dem dargestellten Ausführungsbeispiel jeweils einem Bedienplatz zugeordnet sind. Um eine einwandfreie Synchronisierung - das heißt, eine einwandfreie zeitliche Folge der PCM-Signale innerhalb des PCM-Busses - zu gewährleisten, wird lediglich in einem Koppelfeld 55 ein Taktsignal erzeugt, während die anderen PCM-Koppelfelder 51 bis 54 durch Ableitung eines Takts aus dem PCM-Bus synchronisiert werden. Von einer nicht dargestellten Steuereinrichtung erhält daher lediglich das PCM-Koppelfeld 55 ein Signal ActC, das einen Taktgenerator aktiviert.

Die Aufteilung der Funktionen auf die verschiedenen PCM-Koppelfelder kann in vielfältiger Weise vorgenommen werden. So können beispielsweise im Normalbetrieb jeweils einem PCM-Koppelfeld vorgegebene Systemeinheiten (Teilnehmer, Bedienplätze) zugeordnet sein. Zusätzlich dazu sind in jedem Koppelfel jedoch alle Informationen über alle möglicherweise zu schaltenden Verbindungen vorhanden, so daß bei Ausfall eines PCM-Koppelfeldes die von ihm normalerweise zu schaltenden Verbindungen von einem anderen Koppelfeld übernommen werden können. Es ist jedoch auch möglich, während des Normalbetriebes die Steuerung einer Verbindung von einem PCM-Koppelfeld auf ein anderes zu übergeben.

Fig. 3 enthält eine detailliertere Darstellung eines PCM-Koppelfeldes, der daran angeschlossenen PCM-Busse, eines Eingangs- und eines Ausgangsteils. Das Eingangs- und das Ausgangsteil 64 bzw. 66 umfassen im wesentlichen die Anpaßkarten 47 der einzelnen Teilnehmer.

Das PCM-Koppelfeld besteht im wesentlichen aus einem Vermittlungs-Zwischenspeicher 61, der Daten für 32 Teilnehmer bzw. Zeitschlitze zu jeweils acht Bit aufnehmen kann. Den mit 1 bis 32 gekennzeichneten Eingängen werden die Ausgangssignale von 32 Teilnehmern zugeleitet und in Codern 1 bis 32 in digitale Signale umgesetzt, die in den jeweils zugehörigen Zeitschlitz im Eingangs-Highway 62 eingefügt werden. Bei einem praktisch ausgeführten System beträgt die Bitrate 2,048 Mbit/s.

Von einer Mikroprozessorsteuerung 63 werden Zeitschlitzadressen 1 bis 32 generiert, die sowohl dem Eingangsteil 64 als auch dem Zwischenspeicher 61 als Schreibadressen zugeführt werden. Für jeden Zeitschlitz des Eingangs-Highways 62 ist im Zwischenspeicher ein Speicherelement von acht Bit vorgesehen. Um die PCM-Signale (Daten) in dem Ausgangs-Highway 65 in den dem empfangenden Teilnehmer zugeordneten Zeitschlitz einfügen zu können, ist eine von der Schreibadresse abweichende Leseadresse erforderlich. Dazu wird über ein Netzwerk LAN der Mikroprozessorsteuerung 63 eine Information zugeführt, welcher Teilnehmer mit welchem Teilnehmer verbunden werden soll. Diese Information wird in einem Verbindungsspeicher 67 abgelegt, welchem die Zeitschlitzadressen 1 bis 32 als Leseadressen zugeführt werden.

Je nach Inhalt des Verbindungsspeichers wird dann als Leseadresse für den Zwischenspeicher 61 die Nummer des Zeitschlitzes des für den Empfang vorgesehenen Teilnehmers ausgelesen. Wenn also beispielsweise dem Verbindungsspeicher 67 die Zeitschlitzadresse 2 zugeführt wird, was durch die Stellung eines rotierenden Umschalters schematisch dargestellt ist, wird bei dem dargestellten Ausführungsbeispiel die Leseadresse 1 aus dem Verbindungsspeicher 67 in den Zwischenspeicher übertragen, so daß für den Zeitschlitz 2 (das heißt den Zeitschlitz, der an zweiter Stelle liegt) die Daten 1 ausgelesen werden.

Dem dargestellten Zahlenbeispiel liegt also der Fall zugrunde, daß NF-Signale vom Teilnehmer 1 zum Teilnehmer 2 und vom Teilnehmer 2 zum Teilnehmer 1 übertragen werden. Die in den einzelnen Zeitschlitzen des Ausgangs-Highways 65 vorliegenden Signale werden mit Hilfe eines Ausgangsteils decodiert und einzelnen Ausgängen 1 bis 32 für Analogsignale zugeleitet.

Im Falle der Verwendung des an sich bekannten im Zusammenhang mit Fig. 3 erläuterten PCM-Koppelfeldes im Rahmen der Erfindung ist lediglich der Vermittlungs-Zwischenspeicher 61, der Verbindungsspeicher 67 und die Mikroprozessorsteuerung 63 mehrfach vorgesehen. Alle vorgesehenen Vermittlungs-Zwischenspeicher sind mit ihren Eingängen an den Eingangs-Highway 32 angeschlossen, während die Ausgänge 61 parallel mit dem Ausgangs-Highway 65 verbunden sind.

## Patentansprüche

1. Einrichtung zur wahlweisen Verbindung einer Vielzahl von Teilnehmern über mindestens einen PCM-Signale führenden PCM-Bus, wobei den einzelnen Teilnehmern Zeitschlitze zugeordnet sind und wobei Zwischenspeicher vorgesehen sind, die entsprechend zugeführter Vermittlungsinformation mindestens einem PCM-Bus jeweils für einen Teilnehmer bestimmte PCM-Signale entnehmen und in den dem Teilnehmer zugeordneten Zeitschlitz einfügen (PCM-Koppelfeld), dadurch gekennzeichnet, daß mehrere PCM-Koppelfelder (51 bis 55) vorgesehen sind, die mindestens teilweise gleiche Verbindungen herstellen können, die PCM-Signale mindestens einem gemeinsamen PCM-Bus (62) entnehmen und in mindestens einen gemeinsamen PCM-Bus (65) einfügen.

2. Einrichtung nach Anspruch 1, dadurch gekennzeichnet, daß die PCM-Koppelfelder (51 bis 55) über eigene Taktgeneratoren verfügen, wobei durch eine gemeinsame Steuerung jeweils nur eine der Taktgeneratoren aktivierbar ist, während die anderen PCM-Koppelfelder mit dem Takt des einen Taktgenerators synchronisiert werden.

3. Einrichtung nach einem der Ansprüche 1 oder 2 mit mehreren Bedienplätzen, dadurch gekennzeichnet, daß jeweils einem Bedienplatz (45, 46) ein PCM-Koppelfeld (51 bis 55) zugeordnet ist.

4. Einrichtung nach einem der vorhergehenden Ansprüche, dadurch gekennzeichnet, daß jedes PCM-Koppelfeld (51 bis 55) derart ausgelegt ist, daß es Verbindungen zu jedem Teilnehmer herstellen, jedoch bezüglich der Anzahl nicht alle Teilnehmer gleichzeitig verbinden kann.

5. Einrichtung nach einem der vorhergehenden Ansprüche, gekennzeichnet durch eine Steuerung, die festlegt, welches PCM-Koppelfeld (51 bis 55) welche Verbindung bewirkt, wobei bei Ausfall der Steuerung die PCM-Koppelfelder (51 bis 55) jeweils für vorgegebene Verbindungen vorgesehen sind.

6. Einrichtung nach Anspruch 5, dadurch gekennzeichnet, daß die Steuerung derart ausgelegt ist, daß eine Verbindung auch während des Normalbetriebes von einem PCM-Koppelfeld (51 bis 55) an ein anderes übergeben werden kann.
